# EUROPEAN PATENT APPLICATION

(11) **EP 4 790 079 A1**
(43) Date of publication of application: **12.08.2026**
(21) Application number: 25156225.2
(22) Date of filing: 06.02.2025
(51) Int. Cl.: C08G 59/24, C08G 59/32, C08G 59/38, C08G 59/50, C08G 59/66, C08K 7/14

(54) **OPTICALLY TRANSPARENT FIBER-REINFORCED COMPOSITES WITH MATCHING ABBE NUMBERS**

(71) Applicant: Universität Stuttgart, 70174 Stuttgart (DE)
(72) Inventor: Buchmeiser, Michael, 73630 Remshalden (DE); Caydamli, Yavuz, 70437 Stuttgart (DE); Bauer, Johannes Valentin, 71636 Ludwigsburg (DE); Heudorfer, Klaus, 70567 Stuttgart (DE); Middendorf, Peter, 82131 Gauting (DE)
(74) Representative: Meissner Bolte Partnerschaft mbB

(57) **Abstract**

The present invention pertains to a transparent fiber-matrix composite with an epoxy matrix material and reinforcing fibers which are incorporated by the epoxy matrix material, wherein the epoxy matrix material is obtained from reacting an epoxy compound and an epoxy initiator compound and comprises cyclic nonaromatic moieties, wherein the Abbe number of the epoxy matrix material differs from the Abbe number of the reinforcing fibers by no more than 10 units and the n_{d}²⁰ value of the matrix material is in a range from ± 0.05 % and preferably ± 0.01 of the n_{d}²⁰ value of the reinforcing fibers. The respective transparent fiber-matrix composite has high transparency, a high refractive index and a low appearance of haze and is preferably free of aromatic moieties and inorganic compounds other than the reinforcing fibers such as silica. The present application further pertains to methods for the production of respective transparent fiber-matrix composites that are devoid of inorganic compounds such as silica and the use of multifunctional monomers, which are devoid of aromatic functional groups and of or inorganic building blocks such as siloxanes, in a transparent fiber-matrix composite to increase the refractive index of the fiber-matrix composite.

## Description

The present invention pertains to a transparent fiber-matrix composite with an epoxy matrix material and reinforcing fibers which are incorporated by the epoxy matrix material, wherein the epoxy matrix material is obtained from reacting an epoxy compound and an epoxy initiator compound and comprises cyclic non-aromatic moieties, wherein the Abbe number of the epoxy matrix material differs from the Abbe number of the reinforcing fibers by no more than 10 units and the n_{d}²⁰ value of the matrix material is in a range from ± 1% and preferably ± 0.1% of the n_{d}²⁰ value of the reinforcing fibers. The present application further pertains to methods for the production of respective transparent fiber-matrix composite and the use of multifunctional monomers, which preferably are devoid of aromatic functional groups and of inorganic building blocks such as siloxanes, in a transparent fiber-matrix composite to increase the refractive index of the fiber-matrix composite.

### State of the art

Fiber reinforced polymer composites (FRPs), due to their significant advantages such as low cost and superior mechanical properties, are widely utilized in various industrial applications (aerospace, automotive, transport, and construction sectors to name a few). The major goal in the manufacture of FRPs is to achieve the highest visible light transmission with minimum haze while maintaining or even improving mechanical performance of the fiber-reinforced composite.

The main challenge in the optical properties is to accomplish a match of the dispersion curves of the fiber and the polymer in the best possible way. In the classic approach, the refractive index match between the fiber and the polymer is only accomplished for the Na-D line at 589.3 nm. However, to obtain fully transparent, haze-free and non-colored composites it is mandatory to match the entire visible wavelength interval between 400 - 750 nm.

As known from Snell's law, the refractive index (RI) of two media needs to be the same to avoid refraction while the light passes from one medium to another. It is generally aimed to match the refractive indices at the Na-D line at 589.3 nm, however, a perfect match over the entire visible light range is technically required to have a clear and non-hazy view throughout a composite. Small but distinct mismatches at some wavelengths result in chromatic aberration while the RI match needs to be accomplished to the ±0.001 level (Zobeiry, N., A. Lee, and C. Mobuchon, Fabrication of transparent advanced composites. Composites Science and Technology, 2020. 197: 108281). A measure for the chromatic conformity is the "Abbe number", which is a numerical indicator of the average slope of the dispersion curves of a material. Thus, for the provision of transparent and colour/haze free optical it is necessary to not only the match in refractive indices of different material, but it is also necessary to matching the Abbe number as much as possible.

State-of-the-art literature reveals distinct differences in dispersion curves of polymer and glass fibers; consequently, a significant mismatch in RI occurs over a significant interval of the visible wavelength range (see e.g. Zobeiry, N., A. Lee, and C. Mobuchon, Fabrication of transparent advanced composites. Composites Science and Technology, 2020. 197: 108281; Yang, Y., et al., Optically transparent and high-strength glass-fabric reinforced composite. Composites Science and Technology, 2024. 245: 110338; Jiang, L., et al., Fabrication of transparent glass fabric-reinforced thermoplastic composite based on tow-spreading technique. Polymer Composites, 2024. 45: 17017; Jiang, L., et al., A facile route to fabricate transparent and mechanically robust glass-fabric reinforced composites via refractive index matching and tow-spreading technique. Composites Part A: Applied Science and Manufacturing, 2024. 186: 108418; Kim, D.-K., et al., Transparent glass-fiber-reinforced epoxy composites and their optical characteristics. Composites Science and Technology, 2023. 232: 109848; Heudorfer, K., et al., Method of Manufacturing Structural, Optically Transparent Glass Fiber-Reinforced Polymers (tGFRP) Using Infusion Techniques with Epoxy Resin Systems and E-Glass Fabrics. Polymers, 2023. 15 (9): 2283; Caydamli, Y., et al., Transparent Fiber-Reinforced Composites Based on a Thermoset Resin Using Liquid Composite Molding (LCM) Techniques. Materials, 2021. 14 (20): 6087; Meinders, R., et al., Development of fiber-reinforced transparent composites. Polymers and Polymer Composites, 2021. 29: 5826; Jang, J., et al., Preparation of high-performance transparent glass-fiber reinforced composites based on refractive index-tunable epoxy-functionalized siloxane hybrid matrix. Composites Science and Technology, 2021. 201: 108527; Hirai, T., et al., Transparent thermoplastic composite from a refractive index-adjustable polymer blend. Composites Part B: Engineering, 2021. 225: 109258; Seo, Y., et al., Synthesis of refractive index tunable silazane networks for transparent glass fiber reinforced composite. Ceramics International, 2017. 43 (10): 7895; Zhu, H. and S.K. Khanna, A Novel Transparent Glass Fiber-Reinforced Polymer Composite Interlayer for Blast-Resistant Windows. Journal of Engineering Materials and Technology, 2016. 138 (3): 031007).

When FRPs are produced with increasing volume % of fiber in the composite, the mismatch in dispersion curves of the optical transmission and thus haze values become more pronounced (Caydamli, Y., et al., Transparent Fiber-Reinforced Composites Based on a Thermoset Resin Using Liquid Composite Molding (LCM) Techniques. Materials, 2021. 14 (20): 6087). Kang, E.-S., et al., Thermo-optic characteristics in transparent glass fabric reinforced composite using inorganic-organic hybrid materials. Journal of Sol-Gel Science and Technology, 2012. 62 (3): 333 claims a match of both the Abbe number and n_{D}²⁰ between E-glass and polymer using sol-gel chemistry and SiO₂ as inorganic filler as well as phenyl (bisphenol A) and sulfur groups to increase the RI. Asuncion, M.Z., et al., Facile thiol-ene reactions of vinyl T10/T12 silsesquioxanes for controlled refractive indices for transparent fiber glass reinforced composites. Journal of the Ceramic Society of Japan, 2015. 123 (1441): 725; Krug III, D.J., et al., Transparent fiber glass reinforced composites. Composites Science and Technology, 2013. 77: 95 report on a match of both the Abbe number and n_{D}²⁰ with S-glass fibers using thiol-ene chemistry and polyhedral oligomeric silsesquioxanes (POSS).

In order to match the RI of the polymer matrix with the one of the glass fibers, high refractive indices are required. Also, glass fibers have high Abbe numbers compared to polymer matrices with similar refractive indices. Generally, the required refractive index values of polymers can be provided by utilizing phenyl groups in the polymer. However, phenyl groups cause a decrease in the Abbe number. In search of functional groups or systems that provide both a high Abbe number and a high refractive index to the polymeric matrix, sulfur-containing monomers have been used (Asuncion, M.Z., et al., Facile thiol-ene reactions of vinyl T10/T12 silsesquioxanes for controlled refractive indices for transparent fiber glass reinforced composites. Journal of the Ceramic Society of Japan, 2015. 123 (1441): 725; Kim, D.H., et al., One-step vapor-phase synthesis of transparent high refractive index sulfur-containing polymers. Sci. Adv., 2020. 6: eabb5320; Matsuda, T., et al., Optical material of high refractive index resin composed of sulfur-containing aliphatic and alicyclic methacrylates. Journal of Applied Polymer Science, 2000. 76 (1): 45; Jiang, L., et al., Direct introduction of elemental sulfur into polystyrene: A new method of preparing polymeric materials with both high refractive index and Abbe number. Polymer, 2019. 180: 121715, Wuliu, Y., et al., High Refractive Index and High Abbe Number Polymer Based on Norbornadiene. Macromolecules, 2023. 56 (23): 9881; Jang, W., et al., Visible, Mid- and Long-Wave Infrared Transparent Sulfur-Rich Polymer with Enhanced Thermal Stability. Chemistry of Materials, 2023. 35: 8181; Jeon, Y., et al., Low birefringence and low dispersion aliphatic thermosets with a high and tunable refractive index. Polymer Chemistry, 2023. 14 (10): 1117; Matsukawa, K., et al., Preparation of Photo-curable Thiol-Ene Hybrids and Their Application for Optical Materials. Journal of Photopolymer Science and Technology, 2010. 23 (1): 115; Lü, C., et al., Studies on syntheses and properties of episulfide-type optical resins with high refractive index. Journal of Applied Polymer Science, 2003. 89 (9): 2426). However, these materials face the disadvantage that the stating material for the production of the respective polymers in the FRPs are comparatively expensive.

Also, cyclic olefin groups have been reported to provide high Abbe numbers to an optical material (Wuliu, Y., et al., High Refractive Index and High Abbe Number Polymer Based on Norbornadiene. Macromolecules, 2023. 56(23): 9881; Zhao, Y., et al., Cyclic Olefin Terpolymers with High Refractive Index and High Optical Transparency. ACS Macro Letters, 2023. 12 (3): 395; Li, Z., et al., Design and Synthesis of Optical Biobased Polycarbonates with High Refractive Index and Low Birefringence. Industrial & Engineering Chemistry Research, 2024. 63 (9): 3975; Yuan, H., et al., Cyclic Olefin Copolymer Bearing Pendant Fluorenyl Groups with High Refractive Index and Low Chromatic Dispersion. Macromolecules, 2022. 55 (1): 125).

Despite of these advancements, there is a need for transparent fiber-reinforced polymer composites with provide high transparency as well as an as high as possible match in the refractive index over the visible light range to avoid haze and thereby provide an as clear as possible impression of objection through the composites. Also, there is a need for respective transparent fiber-reinforced polymer composites which provide high absolute Abbe numbers.

The present application addresses these needs.

### Description of the invention

In the investigations, which are underlying the present invention, it has been discovered that a desirable high Abbe number and a high match of not only the refractive index of 589.3 nm, but over the range of about 486.1 nm to 656.3 nm can be provided by the combination of epoxy polymers and transparent reinforcing fiber, in particular glass fiber, when the epoxy polymer comprises a minimum of aromatic moieties and a substantial quantity of cyclic non-aromatic moieties. With respective combinations, it is possible to match the wavelength of the materials over a much broader wavelength range which reduces haze and colored halo impression which are provided by the material.

Accordingly, in a first aspect, the present invention provides a transparent fiber-reinforced polymer composite comprising an epoxy matrix material and reinforcing fibers which are incorporated by the epoxy matrix material, wherein the epoxy matrix material is obtained from reacting an epoxy compound and an epoxy initiator compound and comprises cyclic non-aromatic moieties, wherein the Abbe number of the epoxy matrix material differs from the Abbe number of the reinforcing fibers by no more than 10 units and the n_{d}²⁰ value of the matrix material is in a range from ± 0.05 and preferably ± 0.01 of the n_{d}²⁰ value of the reinforcing fibers.

In the above, the n_{d}²⁰ designates the refractive index at a wavelength of 587.1 at 20°C.

The Abbe number is a measure of the material's dispersion (i.e. the change of refractive index versus wavelength), which is calculated for the wavelength range of 486.1 nm to 656.3 nm via the refractive indices ("n") of the material at the wavelengths of the Fraunhofer's lines C, d, and F spectral lines and the equation: V_{d} = (n_{d}-1)/(n_{F}-n_{c}). For the purposes of this invention, the respective refractive indices are determined at a temperature of 20°C, respectively.

As noted above, the epoxy matrix material is a polymer, which is obtained by the reaction of an epoxy compound (which in the context of this invention is a compound, which contains epoxy functional groups) and an epoxy initiator compound (i.e. a compound, which contains functional groups which are reactive towards epoxy groups such as NH₂- or SH-groups). In the invention, it is possible that either the epoxy compound, the epoxy initiator compound or both comprise cyclic non-aromatic moieties.

The term "cyclic non-aromatic moieties" designates parts or sub-units of the epoxy polymer or the respective precursors thereof, which are cyclic but which are not aromatic. In this regard, the term "aromatic" is mainly intended to denote aromatic hydrocarbon moieties (such as phenyl groups) but also encompasses heteroaromatic ring systems such as pyridines or pyrimidines. On the other hand, isocyanuric derivatives, where the N is functionalized, is not considered an aromatic moiety, as in this case the isomerisation of the (O=C)-N-R to RO-C-N is prevented by means of the N-substituent.

The indication that the reinforcing fibers are "incorporated by" the epoxy matrix material means that in the inventive transparent fiber-reinforced polymer composite the fibers are fully surrounded by the epoxy material, so that the surface of the composite, with the possible exception of small remaining portions where no matrix material is present, is formed by the matrix material.

As noted above, aromatic moieties such as phenyl groups cause a decrease in the Abbe number, so that it is desired that the inventive transparent fiber-reinforced polymer does not comprise relevant quantities of aromatic moieties. Preferably, the content of aromatic moieties in the inventive epoxy matrix material is equal to or less than 1 wt.-% of the weight of the polymer, more preferably equal to or less than 0.5 wt.-% and more preferably equal to or less than 0.1 wt.-%. Particularly preferably, the epoxy matrix material is free of aromatic moieties.

In the context of the present invention, it is also preferred that the epoxy matrix material is substantially free of inorganic constituents such as silica or inorganic building blocks such as siloxanes, i.e. it the amount of such constituents should preferably by not more than 2 wt.-%, more preferably not more than 1 wt.-% and even more preferably not more than 0.1 wt.-%. Particularly preferably, the epoxy matrix material does not comprise any inorganic constituents such as silica or inorganic building blocks such as siloxanes. In the context of this invention siloxane building blocks encompass any subunit with at least one Si-O bond.

The cyclic non-aromatic moieties in the epoxy matrix material may be heterocyclic moieties, such as substituted isocyanurates, tetrahydrofuranes, tetrahydropyranes or the like. If the non-aromatic moiety forms part of the epoxy compound, the moiety will normally not comprise functional groups such as amines in aliphatic heterocyclic groups such as pyrrolidines or piperidines, whereas such groups may be present of in cyclic non-aromatic moieties which are present in the epoxy initiator compound. In addition, particularly suitable non-aromatic moieties in the epoxy matrix material are cycloaliphatic moieties, e.g. in the form of cyclohexane, cyclopentane or cycloheptane rings, which may or may not be substituted.

The epoxy compound is suitably a compound, which has two or more epoxy groups in the molecule. Particularly preferred epoxy compounds comprise epoxy polymer precursors selected from triglycidyl isocyanurate (TGIC), 3,4-epoxycyclohexylmethyl-3',4'-epoxycyclohexane carboxylate (ECC), bis(3,4-epoxycyclohexylmethyl) adipate, 1,4-cyclohexanedimethanol diglycidyl ether or mixtures thereof. Preferably, the epoxy compound will account for 20 wt.-% or more, more preferably 30 to 80 wt.-% and even more preferably 35 to 70 wt.-% of the total weight of the epoxy matrix material.

Particularly preferred epoxy initiator compounds comprise aliphatic polyamines comprising cycloaliphatic moieties, wherein especially the aliphatic polyamines selected from the group comprising 4,4'-methylenebis(2-methylcyclohexylamine), 4,4'-methylenebis(cyclohexylamine), and isophorone diamine are useful. The epoxy initiator compound can be used in larger amount of up to 40 wt.-% preferably up to 35 wt.-%, but will usually be used in lower quantities such as 10 wt.-% or less, in particular 5 to 0.1 wt.-% and more preferably 2.5 to 0.5 wt.-% of the total weight of the epoxy matrix material.

The content of the cyclic non-aromatic moieties in the epoxy matrix material of the inventive transparent fiber-reinforced polymer composite is preferably at least 10 wt.-% of the weight of the matrix material, more preferably at least 15 wt.-% and even more preferably at least 18 wt.-%. On the other hand, the weight of the cyclic non-aromatic moieties need not be excessive, so that the respective weight may e.g. be equal to or less than 60 wt.-%, preferably equal to or less than 55 wt.-% and even more preferably equal to or less than 50 wt.-%.

In the investigations which are underlying the resent invention, it has furthermore been discovered that by increasing the crosslinking density of the epoxy polymer it is possible to increase the refractive index of the matrix material without at the same time having to introduce aromatic moieties. Such increase of the crosslinking density is possible by using epoxy compounds, which comprise a higher quantity of epoxy functional groups (e.g. three or more) or by incorporation of compounds which comprise three or more functional groups which are reactive towards epoxy functional groups. From the perspective of availability and costs, the latter option is preferred.

A particularly suitable means to increase the crosslinking density of the epoxy polymer of the invention is by incorporation of a polythiol compound into the polymer, where the polythiol compound comprises at least 3 thiol groups. Especially suitable polythiol compounds comprise 3 to 8 and more preferably 4 to 6 thiol groups. In a most preferred embodiment, dipentaerythritol hexakis(3-mercaptopropionate) (i.e. a hexa functional polythiol) is used as a polythiol compound.

The reinforcing fiber in the inventive transparent fiber-reinforced polymer composite is preferably a fiber with a high n_{d}²⁰ and a high Abbe number, which is most conveniently met if the fiber is a glass fiber. A particularly preferred fiber material for use in the context of this invention is E-glass, especially in the form of ECR glass, or S-glass, preferably in the form of S2 glass. Alternatively, or in addition thereto, it is preferred that the fiber have a dimeter in the µm range, whereas a diameter of 1 to 100 µm is preferred, a diameter in the range of 2 to 50 µm is more preferred and a diameter in the range of 5 to 30 µm is even more preferred.

Whereas the fibers can be incorporated into the fiber-reinforced polymer composite in basically any form including loose fibres, but for the production of a product with a uniform distribution of the fibers in the composite it is preferred that the fiber is provided as a woven or non-woven fabric. If such woven or non-woven is introduced into a mold, the fibers are fixed by the woven or non-woven structure in their position and remain essentially uniformly distributed if the epoxy matrix material is added.

As noted above, to provide the desired visible and transparent properties of the transparent fiber-reinforced polymer composite it is necessary that the Abbe number of the epoxy matrix material is essentially matched to the Abbe number of the reinforcing fibers, for which it is particularly preferred that the Abbe number of the matrix material differs from the Abbe number of the reinforcing fibers by no more than 5 units, more preferably no more than 2 units and even more preferably no more than 1 unit. In addition, it is preferred that the Abbe number in absolute terms is high, such as at least 40, preferably at least 45 and even more preferably at least 48. Alternatively, or in addition thereto it is preferred that the n_{d}²⁰ of the epoxy matrix material and the reinforcing fibers differs by no more than ±0.005, more preferably no more than ±0.002 and even more preferably no more than ±0.001.

In an especially preferred embodiment, the Abbe number of the matrix material and reinforcing fibers is ≥ 50 and the n_{d}²⁰ is 1.562. In another especially preferred embodiment, the Abbe number of the matrix material and reinforcing fibers is ≥ 54 and the n_{d}²⁰ is 1.527.

With regard to the weight content of reinforcing fiber, the transparent fiber-reinforced polymer composite is not subject to any relevant limitations, where the content should only be high enough to provide a noticeable improvement of the resistance of the composite towards mechanical stress. Preferably though, the transparent fiber-reinforced polymer composite comprises at least 1 % by weight of reinforcing fibers. On the other hand, the upper limit of the content of the fiber is when the content of the epoxy compound is just sufficient to filly any gaps between the fibers. Suitably, the reinforcing fiber content in the inventive transparent fiber-reinforced polymer composite is in the range from 1 to 75 wt.-%, preferably 20 to 60 wt.-%, most preferably 40 to 55 wt.%.

Likewise, the content of epoxy matrix material is preferably in the range from 25 to 99 wt.-% of the weight of the composite, more preferably 40 to 80 wt.-% and even more preferably 45 to 60 wt.-%.

To provide for an as high as possible transparency and an as much as possible suppressed haze or halo appearance, the transparent fiber-reinforced polymer composite preferably does not comprise relevant contents of other materials, which can compromise these characteristics. Nonetheless, it is of course possible to incorporate glass particles into the composite, which are based on the same glass as the reinforcing fibers, and which may be incorporated into the epoxy compound prior to addition of the same to the reinforcing fibers. In a preferred embodiment, the content of compounds other than reinforcing fibers and epoxy polymer in the inventive transparent fiber-reinforced polymer composite is 2 wt.-% or less, preferably 1 wt.-% or less, more preferably 0.1 wt.-% or less. In an especially preferred embodiment, the transparent fiber-matrix composite is constituted only from fibers and the epoxy matrix polymer.

In a second aspect, the present invention pertains to a method for the production of a transparent fiber-reinforced polymer composite as described above, which comprises the steps of:
- providing the reinforcing fibers in an infiltration mold;
- preparing a mixture of an epoxy compound and an epoxy initiator compound;
- combining the prepared mixture with the reinforcing fibers in a vacuum assisted process or resin transfer molding process;
- curing the epoxy component and initiator.

An "infiltration mold", as this term is understood in this invention is a form with a free volume, where the reinforcing fibers can be placed in and where, when the epoxy compound is added in a flowable form, the free spaces between the fibers can be filled ("infiltrated") with the flowable epoxy compound. If the filling is facilitated by a vacuum assisted process, the infiltration mold is provided with means to enable that the gas in the infiltration mold is evacuated. If the filling of the mold is by a resin transfer molding process, the mold has an inlet, by which the flowable epoxy compound can be introduced into the injection mold.

The incorporation of the epoxy matrix material precursors in the method of the invention is critical, as the precursors have to be added in flowable form, where a higher viscosity of the precursors on combination with the reinforcing fibers ensures that free gas volume between the fibers can essentially completely be filled with the epoxy matrix material. As on combination of the epoxy compound and the epoxy initiator compound, the compounds directly start to react with each other, which may result in warming of the mixture and an increase of the viscosity thereof, it is advantageous in the practice of the invention if the epoxy initiator compound is introduced into the infiltration mold prior to introduction of the epoxy compound. On the other hand, to ensure even curing of the epoxy compound it is necessary that the epoxy initiator compound is evenly distributed inside in the reinforcing fibers. To meet both requirements at the same time, it is expedient that the epoxy initiator compound or a part thereof is introduced into the infiltration mold by spraying the same on the fibers in the mold and by subsequently adding the epoxy compound into the infiltration mold.

Accordingly, in a further preferred aspect, the present invention is also concerned with a method for the production of a transparent fiber-reinforced polymer composite as described above, which comprises the steps of:
- providing the reinforcing fibers in an infiltration mold;
- applying an epoxy initiator compound onto the reinforcing fibers, preferably by spraying the epoxy initiator compound onto the reinforcing fibers;
- adding the epoxy compound and optionally polythiol compound to the reinforcing fibers having the epoxy initiator applied upon;
- curing the epoxy component and initiator.

The epoxy initiator compound can be applied onto the reinforcing fibers either before the reinforcing fibers are placed in the infiltration mold, or the epoxy initiator compound can be applied onto the reinforcing fibers after the reinforcing fibers have been placed in the infiltration mold. Application prior to placement into the infiltration mold is preferred. In addition, when the transparent fiber-reinforced polymer is prepared with pre-spraying application of the epoxy initiator compound, it is preferred that the content of this compound, on the total weight of the constituents, which form the epoxy matrix material, is less than 10 wt.-%, preferably in the range from 5 to 0.1 wt.-% and more preferably in the range from 2.5 to 0.5 wt.-%.

Whereas the curing of the epoxy compound and epoxy initiator compound can be at any suitable temperature, where such curing can proceed as long as the temperature is low enough to ensure that the composition does not overheat, it is expedient if the curing is at a temperature of from 50°C to 120°C and preferably 70°C to 110°C.

As noted above, it is preferred that the transparent fiber-reinforced polymer composite of the invention do not comprise aromatic moieties or inorganic building blocks such as siloxanes in the epoxy matrix material, so that in a preferred aspect, the method does not involve the use of respective precursors as epoxy compound and epoxy initiator compound or as part thereof. In addition, as noted above the transparent fiber-reinforced polymer composite of the invention do not comprise any additional inorganic compounds such as silica, so that preferably the method does not involve the use of such compounds.

In the investigation, which are underlying the present invention, it has also been found that the use of multifunctional monomers, which are devoid of aromatic functional groups and inorganic building blocks such siloxanes, in a transparent fiber-matrix composite increases the refractive index of the fiber-matrix composite. Accordingly, in a further aspect, the present invention also pertains to a use of multifunctional monomers, in a transparent fiber-matrix composite to increase the refractive index of the fiber-matrix composite. For this use, it is preferred that the multifunctional monomers are also devoid of inorganic building blocks such siloxanes. Moreover, it is preferred that multifunctional monomers in the use are polythiol compounds as noted above.

In the following the present invention will be further illustrated by means of examples, which should however not be construed as limiting to the scope of the invention by any means.

### Examples

The composites described in the following examples were either produced from ECR glass fibers (DBW Advanced Fiber Technologies GmbH, Bovenden, Germany) or from S2 glass fibers (AGY (Aiken, SC, USA), Gavazzi Tessuti Tecnici S.p.A. Socio Unico, Milano, Italy and Gividi Fabrics S.r.l., Brugherio, Italy respectively). The ECR fibers were used as nonwovens, while the S2 glass fiber samples were woven fabrics.

### Example 1:

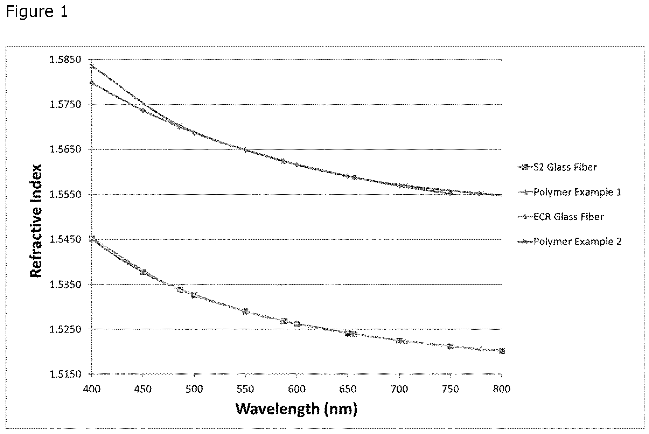

12.11 g triglycidyl isocyanurate were heated to 140°C and molten in a beaker. 15.66 g 1,4-cyclohexanedimethanol diglycidyl ether were added, the mixture was stirred until it became homogeneous and then kept at 120°C to prevent recrystallization. 14.57 g 4,4'-methylenebis(2-methylcyclohexylamine) were added and infiltration of this monomer mixture was accomplished in a 120°C preheated VAP (Vacuum Assisted Process) and/or RTM (Resin Transfer Molding) system with the S2 woven fabric. The composite was cured at 100°C for 24h. A comparison of the dispersion curves of the polymer and S2-glass is shown in Figure 1. The Abbe numbers of fiber and polymer matrix match at 54 and n_{d}²⁰ at 1.5268.

### Example 2:

26.07 g triglycidyl isocyanurate was heated to 140°C and molten in a beaker. 10.57 g 1,4-cyclohexanedimethanol diglycidyl ether were added, the mixture was stirred until it became homogeneous and kept at 120°C to prevent recrystallization. 43.34 g dipentaerythritol hexakis(3-mercaptopropionate) (DiPEHMP) were added under stirring. Finally, 0.80 g 4,4'-methylenebis(2-methylcyclohexylamine) were added and infiltration of an ECR nonwoven fabric was accomplished in a 120°C preheated VAP (Vacuum Assisted Process) and/or RTM (Resin Transfer Molding) system. The composite was cured at 100°C for 24h. A comparison of the dispersion curves of the polymer and ECR-glass fiber is shown in Figure 1. The Abbe numbers of fiber and polymer matrix match at 50 and n_{d}²⁰ at 1.5624.

### Example 3:

8.69 g triglycidyl isocyanurate was heated to 140°C and molten in a beaker. 11.23 g 3,4-epoxycyclohexylmethyl-3',4'-epoxycyclohexane carboxylate (ECC) were added, and the mixture was stirred until it became homogeneous and kept at 120°C to prevent recrystallization. 22.13 g dipentaerythritol hexakis(3-mercaptopropionate) (DiPEHMP) were added under stirring. Finally, 0.42 g 4,4'-methylenebis(2-methylcyclohexylamine) were added and infiltration of an ECR nonwoven fabric was accomplished in a 120°C preheated VAP (Vacuum Assisted Process) and/or RTM (Resin Transfer Molding) system. The composite was cured at 100°C for 24h. The Abbe numbers of fiber and polymer matrix match at 50 and n_{d}²⁰ at 1.5624.

### Example 4:

19.03 g triglycidyl isocyanurate was heated to 140°C and molten in a beaker. 4.90 g polyethylene glycol) diglycidyl ether (Mn≈500 g/mol) were added, and the mixture was stirred until it became homogeneous and kept at 120°C to prevent recrystallization. 26.49 g dipentaerythritol hexakis(3-mercaptopropionate) (DiPEHMP) were added under stirring. Finally, 0.51 g 4,4'-methylenebis(2-methylcyclohexylamine) were added and infiltration of an ECR nonwoven fabric was accomplished in a 120°C preheated VAP (Vacuum Assisted Process) and/or RTM (Resin Transfer Molding) system. The composite was cured at 100°C for 24h. The Abbe numbers of fiber and polymer matrix match at 50 and n_{d}²⁰ at 1.5624.

### Example 5:

22.92 g triglycidyl isocyanurate was heated to 140°C and molten in a beaker. 5.65 g poly(ethylene glycol) diglycidyl ether (Mn≈1000 g/mol) were added, and the mixture was stirred until it became homogeneous and kept at 120°C to prevent recrystallization. 30.35 g dipentaerythritol hexakis(3-mercaptopropionate) (DiPEHMP) were added under stirring. Finally, 0.60 g 4,4'-methylenebis(2-methylcyclohexylamine) were added and infiltration of an ECR nonwoven fabric was accomplished in a 120°C preheated VAP (Vacuum Assisted Process) and/or RTM (Resin Transfer Molding) system. The composite was cured at 100°C for 24h. The Abbe numbers of fiber and polymer matrix match at 50 and n_{d}²⁰ at 1.5624.

### Example 6:

16.20 g triglycidyl isocyanurate was heated to 140°C and molten in a beaker. 3.90 g polypropylene glycol) diglycidyl ether (Mn≈380 g/mol) were added, and the mixture was stirred until it became homogeneous and kept at 120°C to prevent recrystallization. 23.07 g dipentaerythritol hexakis(3-mercaptopropionate) (DiPEHMP) were added under stirring. Finally, 0.44 g 4,4'-methylenebis(2-methylcyclohexylamine) were added and infiltration of an ECR nonwoven fabric was accomplished in a 120°C preheated VAP (Vacuum Assisted Process) and/or RTM (Resin Transfer Molding) system. The composite was cured at 100°C for 24h. The Abbe numbers of fiber and polymer matrix match at 50 and n_{d}²⁰ at 1.5624.

### Example 7:

15.76 g triglycidyl isocyanurate was heated to 140°C and molten in a beaker. 3.69 g 1,6-hexanediol diglycidyl ether were added. The mixture was stirred until it became homogeneous and kept at 120°C to prevent recrystallization. 23.97 g dipentaerythritol hexakis(3-mercaptopropionate) (DiPEHMP) were added under stirring. Finally, 0.44 g 4,4'-methylenebis(2-methylcyclohexylamine) were added and infiltration of an ECR nonwoven fabric was accomplished in a 120°C preheated VAP (Vacuum Assisted Process) and/or RTM (Resin Transfer Molding) system. The composite was cured at 100°C for 24h. The Abbe numbers of fiber and polymer matrix match at 50 and n_{d}²⁰ at 1.5624.

### Example 8:

17.39 g triglycidyl isocyanurate was heated to 140°C and molten in a beaker. 3.68 g neopentyl glycol diglycidyl ether were added. The mixture was stirred until it became homogeneous and kept at 120°C to prevent recrystallization. 26.30 g dipentaerythritol hexakis(3-mercaptopropionate) (DiPEHMP) were added under stirring. Finally, 0.48 g 4,4'-methylenebis(2-methylcyclohexylamine) were added and infiltration of an ECR nonwoven fabric was accomplished in a 120°C preheated VAP (Vacuum Assisted Process) and/or RTM (Resin Transfer Molding) system. The composite was cured at 100°C for 24h. The Abbe numbers of fiber and polymer matrix match at 50 and n_{d}²⁰ at 1.5624.

### Example 9:

21.25 g triglycidyl isocyanurate was heated to 140°C and molten in a beaker. 6.80 g ethylene glycol diglycidyl ether were added. The mixture was stirred until it became homogeneous and kept at 120°C to prevent recrystallization. 36.75 g dipentaerythritol hexakis(3-mercaptopropionate) (DiPEHMP) were added under stirring. Finally, 0.66 g 4,4'-methylenebis(2-methylcyclohexylamine) were added and infiltration of an ECR nonwoven fabric was accomplished in a 120°C preheated VAP (Vacuum Assisted Process) and/or RTM (Resin Transfer Molding) system. The composite was cured at 100°C for 24h. The Abbe numbers of fiber and polymer matrix match at 50 and n_{d}²⁰ at 1.5624.

### Example 10:

0.80 g 4,4'-methylenebis(2-methylcyclohexylamine) were pre-sprayed onto ECR nonwoven fabrics which were then placed into the infiltration mold. A mixture of 26.07 g triglycidyl isocyanurate, 10.57 g 1,4-cyclohexanedimethanol diglycidyl ether, and 43.34 g dipentaerythritol hexakis(3-mercaptopropionate) (DiPEHMP) was infiltrated into that 120°C preheated VAP (Vacuum Assisted Process) and/or RTM (Resin Transfer Molding) system. That way the pre-sprayed 4,4'-methylenebis(2-methylcyclohexylamine) was mixed with the monomer mixture. The composite was cured at 100°C for 24 h. The Abbe numbers of fiber and polymer matrix match at 50 and n_{d}²⁰ at 1.5624.

The dispersion curves of the S2-glass fiber and a polymer matrix as described in the example 1 and the dispersion curves of ECR-glass fiber a polymer matrix as described in the example 2 is shown in figure 1.

## Claims

1. Transparent fiber-reinforced polymer composite comprising an epoxy matrix material and reinforcing fibers which are incorporated by the epoxy matrix material, wherein the epoxy matrix material is obtained from reacting an epoxy compound and an epoxy initiator compound and comprises cyclic non-aromatic moieties, wherein the Abbe number of the epoxy matrix material differs from the Abbe number of the reinforcing fibers by no more than 10 units and the n_{d}²⁰ value of the matrix material is in a range from ± 0.05 of the n_{d}²⁰ value of the reinforcing fibers.

2. Transparent fiber-reinforced polymer composite according to claim 1,
wherein the epoxy matrix is free of aromatic moieties and/or the transparent fiber-reinforced polymer is free of inorganic compounds other than the reinforcing fibers such as silica.

3. Transparent fiber-reinforced polymer composite according to claim 1 or 2, wherein the cyclic non-aromatic moieties in the epoxy matrix material are cycloaliphatic moieties or isocyanurates.

4. Transparent fiber-reinforced polymer composite according to any one of claims 1 to 3, wherein the epoxy compound comprises epoxy polymer precursors selected from triglycidyl isocyanurate, 3,4-epoxycyclohexylmethyl-3',4'-epoxycyclohexane carboxylate, bis(3,4-epoxycyclohexylmethyl) adipate, 1,4-Cyclohexanedimethanol diglycidyl ether or mixtures thereof.

5. Transparent fiber-reinforced polymer composite according to any one of claims 1 to 4, wherein the epoxy initiator compound comprises aliphatic polyamines comprising cycloaliphatic moieties, wherein the aliphatic polyamines are preferably selected from the group comprising 4,4'-methylenebis(2-methylcyclohexylamine), 4,4'-methylenebis(cyclohexylamine), and isophorone diamine.

6. Transparent fiber-reinforced polymer composite according to any one of the preceding claims, wherein the epoxy matrix material is prepared with a polythiol compound, preferably wherein the polythiol compound comprises 3 to 8 and more preferably 4 to 6 thiol groups, even more preferably wherein polythiol compound is dipentaerythritol hexakis(3-mercaptopropionate).

7. Transparent fiber-reinforced polymer composite according to any one of the preceding claims, wherein the reinforcing fiber is E-glass or S-glass fiber, wherein the E-glass is preferably ECR glass and wherein the S-glass is preferably S2 glass.

8. Transparent fiber-reinforced polymer composite according to any one of the preceding claims, wherein the fibers are used as a woven or non-woven fabric.

9. Transparent fiber-reinforced polymer composite according to any one of the preceding claims, wherein the Abbe number of the matrix material differs from the Abbe number of the reinforcing fibers by no more than 10 units and preferably no more than 1 unit and/or wherein the n_{d}²⁰ of the matrix material is in a range from ± 0.005, preferably ± 0.002 and more preferably ± 0.001 of the n_{d}²⁰ value of the reinforcing fibers.

10. Transparent fiber-reinforced polymer composite according to any one of the preceding claims, wherein the Abbe number of the matrix material and reinforcing fibers is ≥ 50 when and the n_{d}²⁰ is 1.562 and ≥ 54 and the n_{d}²⁰ is 1.527.

11. Transparent fiber-reinforced polymer composite according to any one of the preceding claims, wherein the reinforcing fiber content is 1 to 75 wt.-%, preferably 20 to 60 wt.-%, most preferable 40 to 55 wt.% and/or wherein the epoxy polymer accounts for 25 to 99 wt.-% of the weight of the composite, preferably 40 to 80 wt.-% and more preferably 45 to 60 wt.-%.

12. Transparent fiber-reinforced polymer composite according to any one of the preceding claims, wherein the content of compounds other than reinforcing fibers and epoxy polymer is 2 wt.-% or less, preferably 1 wt.-% or less, more preferably 0.1 wt.-% or less and most preferably wherein the transparent fiber-matrix composite is constituted only from fibers and the epoxy matrix polymer.

13. Method for the production of a transparent fiber-reinforced polymer composite according for any one of the preceding claims, comprising the steps of:
- providing reinforcing fibers in an infiltration mold;
- preparing a mixture of an epoxy compound and an epoxy initiator compound;
- combining the prepared mixture with the reinforcing fibers in a vacuum assisted process or resin transfer molding process;
- curing the epoxy compound and epoxy initiator compound, preferably at a temperature in the range from 50 to 120°C and more preferably 70 to 110°C.

14. Method for the production of a transparent fiber-reinforced polymer composite according to any one of claims 1 to 12, comprising the steps of:
- providing reinforcing fibers in an infiltration mold;
- applying an epoxy initiator compound onto the reinforcing fibers, preferably by spraying;
- adding the epoxy compound and optionally polythiol compound to the reinforcing fibers having the epoxy initiator compound applied upon;
- curing the epoxy compound and epoxy initiator compound, preferably at a temperature in the range from 50 to 120°C and more preferably 70 to 110°C.

15. Use of multifunctional monomers, which are devoid of aromatic functional groups and inorganic building blocks such as siloxanes, in a transparent fiber-matrix composite to increase the refractive index of the fiber-matrix composite.
